# EUROPEAN PATENT APPLICATION

(11) **EP 1 571 040 A2**
(43) Date of publication of application: **07.09.2005**
(21) Application number: 05250990.8
(22) Date of filing: 22.02.2005
(51) Int. Cl.: B60Q 1/48, B60Q 1/30

(54) **Proximity detection system for a vehicle**

(30) Priority: 04.03.2004 GB 0404887; 04.03.2004 US 791824
(71) Applicant: Parking Angel Ltd, Norfolk NR12 9PE (GB)
(72) Inventor: Boddy, Terence c/o Parking Angel Ltd, Stalham Norfolk NR12 9PE (GB)
(74) Representative: Wightman, David Alexander

(57) **Abstract**

An object proximity detection system for providing an indication of an object in the path of a vehicle. Sensors (2) and a transmitter (4) may be enclosed in a housing (3) fitable to the rear of a vehicle or a towed vehicle. Wireless transmissions from the transmitter (4) may be received by a receiver (21) in the cabin of the vehicle. The receiver (21) in the cabin of the vehicle may be a portable unit able to be removed from the vehicle and also allow the configuration of the system to be changed so that, upon attachment of a vehicle to be towed, the receiver (21) will provide indications of objects behind the towed vehicle rather than the towing vehicle.

## Description

This invention relates to an electronic proximity detection system for use on vehicles to detect an object in the path of the vehicle. Although generally described as a reversing aid, the technology provides proximity sensors that may be used in alternative placements on a vehicle to indicate distance between a vehicle and an object to assist with manoeuvres other than reversing.

Various proximity sensors have been provided on vehicles to provide drivers with a visual, audible or similar alarm once a vehicle approaches an object.

Reversing aids have been provided that utilized sensors placed on the rear of a vehicle and attached to some form of alarm within the cabin of the vehicle. However, such existing systems are generally incorporated in new vehicles and hard wired into the vehicles such that they have no portability, retro-fitability and are redundant once any form of trailer, caravan or the item is towed behind the vehicle. In fact, existing systems would normally need to be disabled upon fitment of vehicle to be towed to stop the sensors continuously sensing the towed vehicle.

In the case of recreational vehicles, trucking fleets or even typical cars that may occasionally tow trailers or caravans, the existing systems do not provide the portability nor the adaptability to allow components to be swapped from one vehicle to another or to conveniently allow sensing behind the towed vehicle rather than the vehicle itself when in the towed configuration.

It is an object of the present invention to provide an object proximity detection system for a vehicle that overcomes some of the disadvantages of the prior art or at least provides the public with a useful choice.

Accordingly, in the first aspect, the invention may broadly be said to consist in an object proximity detection system for a vehicle including:
at least one proximity sensor unit fitable to an exterior portion of a vehicle;
a transmitter unit in communication with said proximity sensor unit to receive signals from said sensor unit and transmit signals in accordance with the detection by the sensor unit;
at least one receiver unit capable of receiving signals from said transmitter unit;
an indicating means in communication with said receiver unit to provide a driver with an indication of objects sensed by the sensor unit as transmitted by the transmitter unit and received by the receiver unit; and
wherein said sensor unit and said transmitter unit are incorporated in a housing for fitment to a vehicle together.

Preferably said housing is substantially secure against the ingress of water in use.

Preferably said housing includes a front plate on or in which said at least one sensor unit may be mounted.

Preferably said transmitter unit is enclosed in said housing behind said front plate.

Preferably, said at least one sensor unit is connected to an electronic control unit in communication with said transmitter unit. The electronic control unit and transmitter unit may be a combined unit or separate units.

Preferably said housing includes fitment means for fitment to a bumper of a vehicle.

Preferably at least one wire for connection to a power source extends from said housing for attachment to a power source on said vehicle.

Preferably said at least one proximity sensor unit is operable to transmit a signal and receive a reflected signal from an object in the path of the vehicle.

Preferably at least one sensor unit is provided at the front and/or rear of the vehicle to detect objects in the path of the vehicle to assist when manoeuvering the vehicle in a restricted space and reduce the risk of impact with objects in the path of the vehicle.

Preferably a wireless link is provided between the transmitter unit and the receiver unit.

Accordingly, in a second aspect, the invention may broadly be said to consist in an object proximity detection system for a vehicle including:
sensor means including at least one proximity sensor for attachment to an exterior of a vehicle;
transmitter means in communication with said sensor means to transmit signals in accordance with objects detected by said at least one proximity sensor;
receiver means to receive signals from said transmitter means;
at least one indicating means to provide a driver with an indication of objects sensed by said at least one proximity sensor; and
   wherein said receiver means includes switching means such that said indicating means may provide a driver with an indication of objects sensed by sensor means on a towed vehicle and discontinue indicating objects sensed by said sensor means on the towing vehicle.

Preferably the receiver means is arranged within the cabin of the towing vehicle and is connectable to sensor means on the towing vehicle in a first configuration and, in a second configuration, is able to receive and indicate signals from sensor means on the towed vehicle.

The towing vehicle may be provided with at least one proximity sensor at the front and/or rear of the vehicle. Preferably, the receiver means does not receive signals from any sensor on the rear of the towing vehicle in the second configuration. Preferably, the receiver means receives signals from any sensor on the front of the towing vehicle in both the first and second configurations.

Preferably said switching means configures said receiver means to receive signals from said sensor means on said towed vehicle via wireless transmitter means.

Accordingly, in a third aspect, the invention may broadly be said to consist in an object proximity detection system for a vehicle including:
sensor means including at least one proximity sensor for detecting an object in the path of the vehicle;
transmitter means in communication with said sensor means to transmit signals in accordance with objects detected by said at least one proximity sensor;
receiver means to receive signals from said transmitter means;
at least one indicating means to provide a driver with an indication of objects sensed by said at least one proximity sensor; and
brake means operable in response to the proximity of a detected object to stop or slow the vehicle.

Preferably the brake means comprises an air brake for one or more wheels of a towing and/or towed vehicle.

Accordingly, in a fourth aspect, the invention may broadly be said to consist in an object proximity detection system for a vehicle including:
sensor means including at least one proximity sensor fitable to an exterior rear portion of a vehicle and at least one proximity sensor fitable to an exterior front portion of the vehicle for detecting an object in the path of the vehicle; and
control means whereby the sensors may be activated separately or in combination.

Preferred embodiments of the invention will now be described with reference to the following drawings in which:
**Fig. 1** is a perspective view of a housing for sensors and a transmitter in accordance with a first embodiment of the invention;
**Fig. 2** is a cross-sectional view through the apparatus of Fig. 1;
**Fig. 3** is an elevational view of an alternative sensor and transmitter unit; and
**Fig. 4** is a perspective view of a receiver unit in accordance with an embodiment of the invention.

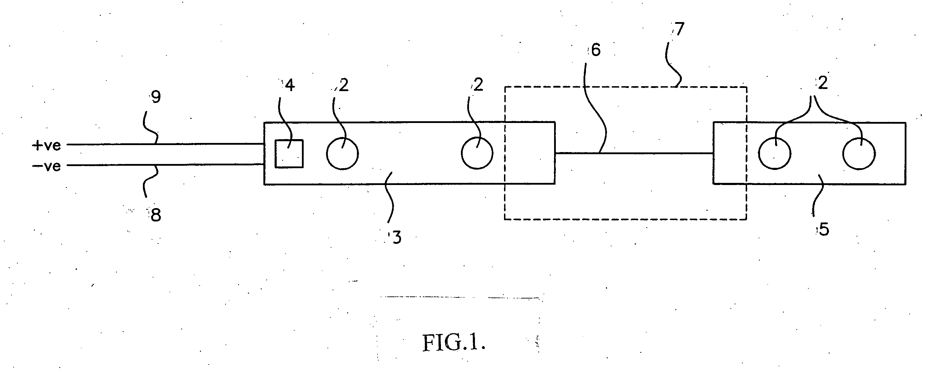

Referring to the drawings, a first embodiment of a portion of the invention is shown in Fig. 1. The invention provides an object proximity sensing system for a vehicle which, in this embodiment, is shown in the form of a reversing aid.

As shown in Fig. 1, sensor means comprising at least one proximity sensor 2 may be provided for fitment to a vehicle. Typically, a plurality of proximity sensors are likely to be provided. Proximity sensors suitable for reversing systems are available in the market as commercial items and the specific form of the sensors may vary according to the particular selection of sensor utilized.

In general, such sensors may comprise a transmitter for emitting a signal such as an ultrasonic signal and a receiver for receiving a reflected signal from an object in the path of the transmitted signal from which the proximity of the object to the sensor can be detected.

Where a plurality of sensors are provided, each sensor may detect a reflected signal from the same or a different sensor and the signals received by the sensors used to determine the proximity of the object to the sensors.

Such sensors are known and may comprise a transducer. This part of the system is conventional and the invention is not concerned with the construction and operation of the sensors.

The present invention mounts at least one sensor, or in this case as shown in Fig. 1, two sensors within a housing unit 3.

The housing unit 3 is intended to protect the sensors as well as providing an ease of fitment of the sensors to the exterior of a vehicle.

A transmitter unit 4 is also provided and, as shown in this preferred embodiment, the transmitter unit 4 is contained within the housing unit 3 together with at least one of the sensors 2. In this embodiment the transmitter unit 4 is combined with an electronic control unit within the housing unit 3. Alternatively, the electronic control unit may be provided separate from the transmitter unit 4.

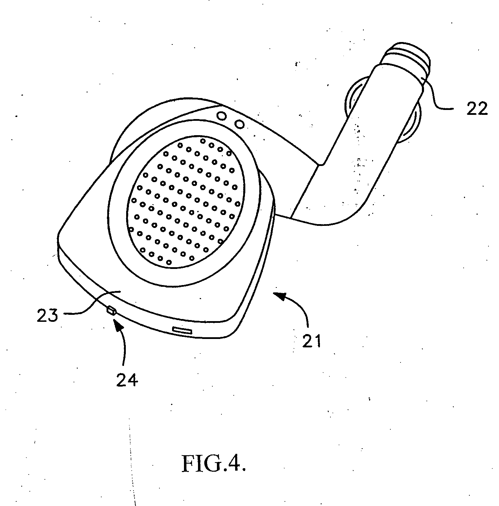

The sensor(s) 2 are connected to the electronic control unit which receives signals from the sensor(s) 2 when activated and processes the signals for transmission by the transmitter unit 4. The transmitter unit 4 may transmit wireless signals on any preferred frequency to be received by a receiving unit 21 as shown in Fig. 4.

To power the electronic control unit, transmitter unit 4 and sensors 2, a power source can be provided within the housing unit 3 as a self-contained power source or, more preferably, external connections in the form of at least one wire or preferably positive and negative wires 8 and 9 may extend from the housing unit 3.

The wires 8 and 9 may be provided with a suitable socket for fitment to a power source on the vehicle or wired into the vehicle. Numerous sources for battery power from a vehicle are provided around the vehicle and may provide suitable points of attachment. For example, the wires 8 and 9 may be connected to the wiring loom for the reversing light(s). In this way a power source for the electronic control unit may be provided such that the sensors and transmitter unit 4 are activated when reverse gear is selected.

In the embodiment shown in Fig. 1, the housing unit 3 containing the sensors 2 is connected by a wire 6 to a second similar housing unit 5 containing at least one and in this case two sensors 2. The wire 6 provides communication from the sensors 2 in the housing unit 5 to the electronic control unit in the housing unit 3. It should be noted that this is a preferred embodiment where a single electronic control unit and transmitter unit 4 is used to receive signals from all the sensors.

In an alternative embodiment, a second electronic control unit and transmitter unit could be provided in the housing unit 5 and its own power source may be provided so as to make the units 3 , 5 independent rather than interconnected as shown.

The reason for the configuration shown in Fig. 1 is that such housing units 3, 5 may be used on some recreational vehicles which may not provide a continuous rear surface on which a single uninterrupted housing unit may be fitted. For example, on some recreational vehicles, a step may be provided in the middle of the rear of the vehicle and, therefore, it may be better to provide the sensors in two housing units as shown for mounting either side of the step. An optional joining piece 7 may be provided to contain a number plate or any other desired artwork such as a manufacturer's logo.

It will be appreciated that the housing unit 3 may be fitted directly to the rear of a vehicle so as to provide sensors to an existing vehicle without such apparatus. Alternatively, the housing unit 3 could be fitted to a towed vehicle such as a caravan, trailer or a trailer unit of a truck.

To provide portability, it may be desirable to provide the housing units such that they may be fitted to a vehicle and subsequently released. The particular fitment mechanism is not shown in Fig. 1 and any suitable mechanism may be employed as will be apparent to those skilled in the art. For example, as the housing units are relatively light, releasable fitment with any suitable mechanism such as double-sided tape, clamps, bolts or similar can be provided. The housing units may be attached to any appropriate part of the vehicle but are typically arranged to be mounted on the bumper.

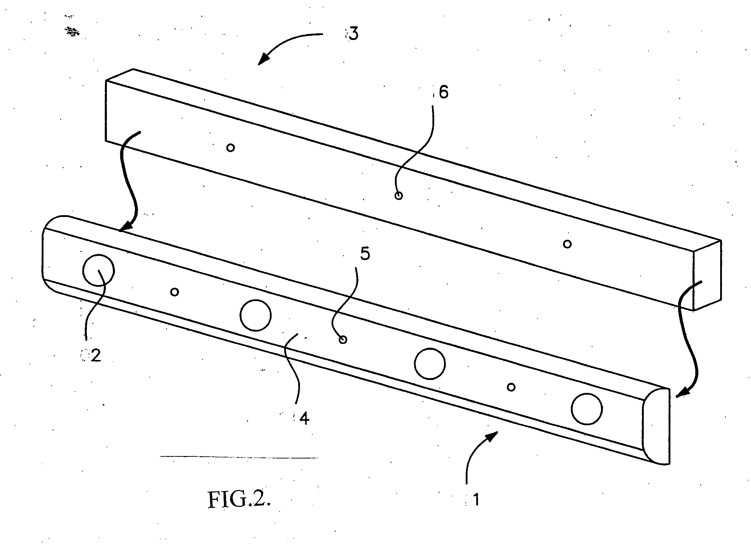

A further embodiment of the invention is shown in Fig. 2. In this embodiment, a longer continuous housing unit 3 is provided made from a front portion 11 having a front plate 14 and a rear portion 12.

The sensors 2 are fitted on or in the front plate 14 and the transmitter unit may be housed behind the front plate 14 to be enclosed by the rear portion 12 providing an enclosed housing unit. It will be appreciated that, when fitted to a vehicle, weather conditions may be adverse and the housing unit 3 formed by the adjoined pieces 11 and 12 is preferably substantially waterproof, at least against normal weather.

Fixing means to adjoin the front portion 11 and rear portion 12 are shown as portions 15 and 16 in which a cooperating fixing member such as a bolt, screw or similar may join the two portions.

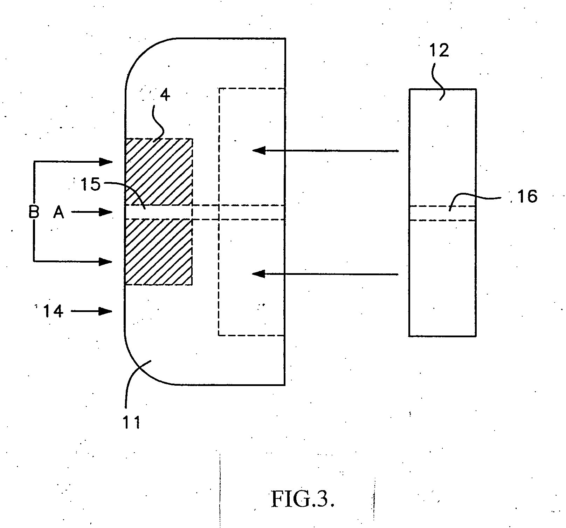

The apparatus of Fig. 2 is shown in cross-section in Fig. 3, again in exploded fashion whereby the rear portion 12 is shown apart from the front portion 11. In use, the rear portion 12 is fitted into the rear side of the front portion 11 to complete the housing unit.

Figure 3 also shows the fitment of the transmitter unit 4 which may also include an electronic control unit as described previously to nest inside the enclosed overall housing unit 3.

Referring to Fig. 4, a receiving unit 21 for operation within the cabin of a vehicle is shown.

This particular receiving unit 21 is shown as a portable unit fitable within the cabin and may include a connection 22 for fitment of the unit into a cigarette lighter socket within a vehicle. This provides a convenient power source for operation of the receiver unit 21 although alternative power sources can be provided.

An indicating means 23 is provided with the receiver unit 21 to provide the driver with an indication of the proximity of an object to the sensors. As with existing proximity sensor units, the indicating means may be a visual display and/or an audible display. This particular embodiment utilizes an audible display such that, as objects get closer to the proximity sensors, the frequency of sounds emitted by the audible indicator increases.

The receiver unit 21 is preferably provided with a control mechanism 24 that may include a switch. The switch is intended to allow alteration of the configuration of the receiver unit 21.

When a receiver unit 21 is used with a normal vehicle, many such vehicles may be provided with their own proximity sensor units that may be wired through the vehicle body and to the receiver unit 21. Alternatively, they may provide some wireless transmission to the receiver unit 21.

When the vehicle in question is towing a towed vehicle such as a trailer, caravan or similar, proximity sensors on the rear of the vehicle will often pick up the towed vehicle as being an object causing a continuous indication from the indication means. Hence often such reversing systems are disabled when a vehicle is towing even though this may be a time at which a driver is in greater danger when reversing due to unfamiliarity with reversing with the trailer or inability to see objects behind the trailer clearly.

In this present embodiment, a sensor unit may be fitted to the trailer and a switch operated such that the receiver unit 21 will now only indicate objects behind the trailer and either disconnect the signals from proximity sensors attached to the rear of the primary vehicle or, alternatively, disconnect the indication means from those primary sensors and instead only operatively connect the indication means to the sensors now on the towed vehicle.

Thus it can be seen that the invention provides an improved arrangement detecting objects in the path of a vehicle while reversing.

Although the invention has been described with particular reference to sensor units mounted on the rear of a vehicle or a towed vehicle to provide a warning of the presence of objects in the path of the vehicle while reversing, it will be understood that the invention is not limited to such arrangements.

Thus, at least one proximity sensor may be provided in a housing for detachable mounting on the front of a vehicle to provide a warning of objects in the path of the vehicle, for example when manoeuvering in a restricted space such as when parking in a gap between two vehicles.

Sensor units at the front and rear of the vehicle may communicate wirelessly with the receiver unit within the cabin of the vehicle to provide a visual and/or audible warning of the presence of objects. Where sensors are provided at the front and rear of the vehicle, they may be configured to generate audible warnings having different characteristics, e.g. pitch, frequency, such that the driver can distinguish between signals generated by proximity to objects at the front and rear of the vehicle.

As described previously, sensors at the rear of the vehicle may be activated when the driver selects reverse gear and de-activated when reverse gear is de-selected and sensors at the front of the vehicle may be operated via a manually operable switch within the vehicle, for example on the dashboard. The switch may operate a timer circuit so that the front sensors are activated for a pre-determined period of time when I required. The timer circuit may be adjustable to allow the length of time the sensors are activated to be set according to the drivers needs and/or complexity of the manoeuvre being undertaken. In this way, the sensors at the front and rear of the vehicle can be operated independently of each other when required. For example, when reversing into a space the front sensors may be turned off and, when driving into a space the front sensors may be turned on (the rear sensors being turned off when reverse gear is not selected).

Alternatively sensors at the front and rear of the vehicle may both be operated via a switch within the vehicle. The switch may operate a timer circuit and the timer circuit may again be adjustable to set the period of time the sensors are activated. A common switch may operate both the front and rear sensors. Alternatively separate switches may be employed to allow the sensors to be operated independently of each other if required.

In another arrangement, a data link input may be provided to allow communication between several transmitter and electronic control units at different positions on the vehicle. For example, where sensors are provided at the front and rear of the vehicle, the rear sensors may be activated when reverse gear is selected as already described and the transmitter unit associated with the rear sensors may transmit a signal to the transmitter unit associated with the front sensors to activate the front sensors. When activated the front sensors may operate on a timer circuit. Alternatively the transmitter unit associated with the rear sensors may transmit a signal to de-activate the front sensors when reverse gear is de-selected.

For vehicles and/or trailers fitted with air brakes, the system may also be arranged to apply the brakes automatically to slow/stop the vehicle. For example, an adjustable timed output may be provided from the transmitter and electronic control unit to allow connection to a control valve for applying the brakes. Other modifications and improvements will be apparent to those skilled in the art.

## Claims

1. An object proximity detection system for a vehicle including:
at least one proximity sensor fitable to an exterior portion of a vehicle;
a wireless transmitter unit in communication with said at least one proximity sensor to receive signals from said sensor and transmit signals in accordance with the detection by the sensor;
at least one receiver unit capable of receiving wireless transmissions from said wireless transmitter unit;
an indicating means in communication with said receiver unit to provide a driver with an indication of objects sensed by said at least one sensor as transmitted by the transmitter unit and received by the receiver unit; and
wherein said at least one sensor and said transmitter unit are incorporated in a housing for fitment to a vehicle together.

2. An object proximity detection system as claimed in claim 1 wherein said housing is substantially secure against the ingress of water in use.

3. An object proximity detection system as claimed in claim 1 or claim 2 wherein said housing includes a front plate on or in which said at least one sensor unit may be mounted.

4. An object proximity detection system as claimed in claim 3 wherein said transmitter unit is enclosed in said housing behind said front plate.

5. An object proximity detection system as claimed in any one of the preceding claims wherein said housing includes fitment means for fitment to a bumper of a vehicle.

6. An object proximity detection system as claimed in any one of the preceding claims wherein at least one wire for connection to a power source extends from said housing for attachment to a power source on said vehicle.

7. An object proximity detection system as claimed in any one of the preceding claims comprising at least one sensor fitable to an exterior rear portion of a vehicle and at least one sensor fitable to an exterior front portion of a vehicle, and means for operating the at least one front sensor independently of the at least one rear sensor.

8. An object proximity detection system as claimed in any one of the preceding claims wherein said receiver unit includes switching means such that said indicating means may provide a driver with an indication of objects sensed by at least one sensor on a towed vehicle and discontinue indicating objects sensed by said at least one sensor on the towing vehicle.

9. An object proximity detection system as claimed in claim 8 wherein said receiver unit is arranged within a cabin of the towing vehicle and is connectable in a first configuration to said at least one sensor on the towing vehicle and, in a second configuration, able to receive and indicate signals from said at least one sensor on the towed vehicle.

10. An object proximity detection system as claimed in claim 9 wherein said switching means configures said receiver unit to receive signals from said at least one sensor on said towed vehicle via a wireless transmitter unit.
